(19) Europäisches Patentamt / European Patent Office / Office européen des brevets

(11) **EP 1 901 624 B1**

(12) **EUROPEAN PATENT SPECIFICATION**

(45) Date of publication and mention
of the grant of the patent:
**28.09.2011 Bulletin 2011/39**

(21) Application number: **06851352.2**

(22) Date of filing: **24.05.2006**

(51) Int Cl.:
**F41H 3/02** (2006.01)

(86) International application number:
**PCT/US2006/020433**

(87) International publication number:
**WO 2008/004993 (10.01.2008 Gazette 2008/02)**

(54) **INFRARED SUPPRESSIVE MATERIAL**

INFRAROTUNTERDRÜCKUNGSMATERIAL

MATÉRIAU SUPPRIMANT LES INFRAROUGES

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **25.05.2005 US 138877
23.05.2006 US 440337**

(43) Date of publication of application:
**26.03.2008 Bulletin 2008/13**

(73) Proprietor: **Gore Enterprise Holdings, Inc.
Newark, DE 19714-9206 (US)**

(72) Inventors:
• **HOLCOMBE, John
West Grove
PA 19390 (US)**

• **NANDI, Manish, K.
Malvern, PA 19355 (US)**

(74) Representative: **Shanks, Andrew et al
Marks & Clerk LLP
Aurora
120 Bothwell Street
Glasgow
G2 7JS (GB)**

(56) References cited:
**US-A- 4 095 940    US-A- 4 532 316
US-A- 4 717 504    US-A- 5 798 304
US-A- 5 955 175    US-A1- 2004 175 407
US-B1- 7 008 694**

**Description**

## FIELD OF THE INVENTION

This invention relates to infrared suppressive materials that suppress near infrared radiation while also providing good shade retention in the visible wavelength spectrum.

## BACKGROUND OF THE INVENTION

Camouflage textile materials used by hunters and by the military typically provide camouflage in the visible region of the electromagnetic radiation spectrum (400-700nm). The terms "visible" and "visible camouflage" will be used herein to denote a material that exhibits sufficient reflectance in the visible region of the electromagnetic spectrum (wavelength from 400nm to 700nm) so that it can be seen by the unassisted human eye. The terms "shade," "shade variation," and the like, refer to variations in color, such as determined by MIL-PRF-32142, MIL-DTL 31011B and 31011A orAATCC. An acceptable shade variation is one which the color and appearance of the camouflage printed laminate shall match the standard sample when viewed using AATCC Evaluation Procedure 9, Option A, under filtered tungsten lamps that approximate artificial daylight D75 illuminant with a color temperature of $7500 \pm 200$ K with illumination of $100 \pm 20$ foot candles, and shall be a fair match to the standard sample under horizon lamplight at $2300 \pm 200$ K; and is characterized herein as "pass" or "fail".

Due to the vastly diverse environments throughout the world, many different camouflage materials exist, including both visibly camouflaged and non-visibly camouflaged materials. The variety of environments (e.g., ranging from woodland to desert), necessitates the use of a variety of colors and patterns to create these camouflage textile materials. For instance in a military woodland camouflage, the materials often use four colors: black, brown, green, and light green. In a military desert camouflage, the textile materials often use three colors: brown, khaki, and a tan. Many visible shade variations exist even within these two examples. Textiles with visible camouflage patterns are typically manufactured by printing the camouflage pattern on an undyed (greige) textile (e.g., woven, knit, non-woven, etc.) surface or by solution dying yarns that are subsequently woven or knitted into a camouflage pattern using, for instance, a jacquard process.

In some applications it is desirable to use textile materials that provide camouflage in other areas of the electromagnetic spectrum (beyond visible). In particular, advances in image intensifiers used in night vision equipment have heightened the need for improved camouflage in the near infrared ("nIR") electromagnetic radiation spectrum (i.e., 720-1100nm). Typical night vision equipment amplifies low intensity electromagnetic radiation in the visible and nIR spectra, with specific sensitivity in the nIR. Like camouflage in the visible spectrum, camouflage in the nIR spectrum enables the material, and thus the wearer or covered structure, to blend in with the environment. A primary difference is that, unlike the visible camouflage, nIR camouflage does not involve a further segmentation of discrete bands of the spectrum (that in the visible gives rise to color separation). As such, effective camouflage in the nIR spectrum requires a material to have an appropriate balance of reflection, or reflectance, and transmittance/absorbance over the whole nIR spectrum. In addition, the ability to detect and identify an object using image intensifiers (such as night vision goggles) also depends on the ability to disrupt the silhouette or the shape of the object. To accomplish this, for example, in apparel, the camouflage textile material is often comprised of areas possessing differing levels of reflectance/transmittance, separated into at least two or three levels of reflectance in a pattern similar to that of the visual camouflage.

Conventional means for achieving desirable camouflage in both the visible and nIR is through a printing process wherein undyed textiles or textiles dyed to a base shade are printed to simultaneously achieve multiple colors (visible spectrum) and levels of nIR reflectance. Most commonly, carbon black is added to the camouflage print ink or paste in varying amounts to vary the nIR reflectance of the resulting textile. A disadvantage to this technique is that the carbon can negatively impact the desired visible shade of the camouflage textile and frequently results in a compromise between achieving appropriate visible and nIR camouflage, particularly in environments which require extremely light shades like the desert. In addition, topically treating textiles with such a carbon finish results in a textile material with poor nIR camouflage durability, as the topical carbon finishing can readily wash and/or wear off in use.

A further challenge in creating camouflage textiles which are suitable for the applications described is the need for comfort of the user. In outdoor environments, comfort in a variety of weather conditions requires that the textiles, and resulting articles, be liquidproof and breathable for optimum comfort. However, providing environmental protection by coating or lamination of liquidproof, breathable films or coatings can also affect the visible and nIR camouflage properties of the textile. For example, in the specific case of a liquidproof, breathable film comprising microporous PTFE, the PTFE film often increases the overall reflectivity in the nIR spectrum, and possibly the visible spectrum as well, resulting in undesirable tradeoffs between durable environmental protection and nIR camouflage.

Efforts to change the IR reflectance of films have been made. For example, U.S. Patent No. 5,859,083, to Spijkers et al., is directed to a water vapor permeable, waterproof polyether ester membrane containing 1 to 10% by weight of finely dispersed carbon particles having an average size of 5 to 40 nm. The object of Spijker et al. is to provide a membrane which is very homogeneous, has good UV stabilities and elevated IR reflectance for a variety of uses.

U.S. Patent Application Publication No. US2003/0096546, to Smith et.al., describes a base textile with a camouflage pattern on the first surface and a coating on the second surface, the coating being an ethylene methyl acrylate thermoplastic with a carbon black pigment. The base textile and coating have a visible light transmission such that shadows of hunters or others inside a blind of the camouflage are not visible on the opposite side of the camouflage.

Camouflage composites that provide thermal image have also been the subject of much research.

U.S. Patent No. 4,560,595 to Johannsson describes a camouflage material tailored to match the thermal emission characteristics of the natural environment where it is to be used, the material incorporating a reflecting thin metallic layer covered on at least the exposed side by a layer of plastic material, the plastic layer incorporating at least two plastics with different emissivity properties. U.S. Patent No. 5,955,175, to Culler, describes a textile material having image masking or suppression in the mid and far infrared region without compromising the effectiveness of visual and nIR camouflage or comfort levels. Specifically, the invention is directed to an air permeable, moisture vapor transmissive, waterproof, heat reflecting material consisting essentially of at least one metallized microporous membrane with an oleophobic coating over the metallized portions thereof. US 4,095,940 (Weingarten) describes a process for the production of camouflage prints on fibres or foils, where the dyed materials meet the requirements for camouflage articles in the visible range and have infrared reflectance values of from 20% to 50% within the infrared range between 700 nm and 1100 nm.

Despite the teaching of the prior art, a need has still existed for a near-infrared suppressive layer, as well as protective textiles and resulting articles incorporating such a layer, which achieve a balance of average reflectance in the visible spectrum (i.e. wavelength range from about 400nm - 700 nm), and average reflectance in the nIR spectrum (i.e. wavelength range about 720 nm - 1100nm) to achieve a desirable result. Particularly, a need has existed for a material which, when incorporated adjacent a camouflage textile layer, provides reduced nIR reflectance without substantially altering the visual camouflage of the textile. Further features such as durable environmental protection in these improved construction have also been unavailable.

## SUMMARY OF THE INVENTION

The current invention overcomes the obstacles of the previous art by providing a layer adjacent to the textile layer that enables reduces nIR reflectance, without substantially altering visual camouflage. Moreover, specific embodiments of the current invention allow for the ability to create camouflage materials that posses a favorable balance of durable environmental protection and appropriate nIR camouflage. Surprisingly, it was found the current invention enables the ability to achieve acceptable visual camouflage, particularly on light colors, and reduced nIR reflectance. More surprisingly, some constructions of the current invention were discovered to have significantly improved durability of nIR camouflage.

## BRIEF DESCRIPTION OF FIGURES

Figure 1 depicts a cross-sectional representation of a monolithic near-infrared suppressive layer.

Figure 2 depicts a cross-sectional representation of a composite near-infrared suppressive layer.

Figure 3 depicts a cross-sectional representation of a textile composite of the invention comprising a near-infrared suppressive layer.

Figure 4 depicts an alternate cross-sectional representation of a textile composite of the present invention comprising a near-infrared suppressive layer.

Figure 5 depicts an alternate cross-sectional representation of a near-infrared suppressive composite in accordance with the present invention.

Figure 6 depicts an alternate cross-sectional representation of a textile composite of the present invention comprising a near-infrared suppressive layer.

Figure 7 depicts an alternate cross-sectional representation of a discontinuous near infrared suppressive composite in accordance with the present invention.

Figure 8 depicts an alternate cross-sectional representation of a continuous near infrared suppressive composite coated with a discontinuous layer of a lighter colored material in accordance with the present invention.

Figure 9 is a graph of wavelength versus percent reflectance for materials made in accordance with Example 2.

## DETAILED DESCRIPTION OF THE INVENTION

A near-infrared suppressive layer for use in camouflage textile composites is provided. Further provided is a near-infrared ("nIR") suppressive composite provided wherein a near-infrared suppressive layer is oriented adjacent to a textile material, whether in an unbound construction, such as a hung liner in a garment or in a bonded construction such as a laminate.

In order to achieve optimal results in a nIR application, it is desirable to create a construction and end article possessing nIR reflectance that is neither too high nor too low. Clearly, a nIR reflectance that is too high relative to the surrounding environment creates a bright silhouette under night vision. Equally, a reflectance that is too low creates a dark silhouette relative to the surrounding environment under night vision. For articles with areas of different reflectance levels (i.e., nIR disruptive pattern), there will typically be areas that are very nIR suppressive, areas that are nIR reflective and areas that are only moderately reflective. It will be understood, that the optimum reflectance levels varies with the environment. However, it is seldom desirable to have a composite textile and end article in which most nIR suppressive areas have a reflectance of 7% or less. It is typically undesirable to have most nIR suppressive areas in an article possess a reflectance less than 10%. On the areas that are more reflective it is undesirable to have a nIR reflectance less than 30%. Typically, it is preferred to have a nIR reflectance in the more reflective areas greater than 45%.

Another important aspect of this invention is that the nIR suppressive layer must not exhibit too dark of a shade in the visible light spectrum. When located behind a light shade textile material, for example, the shade of the nIR suppressive layer can be critical. If the nIR suppressive layer is too dark, it will alter the shade of the camouflaged textile behind which it is located.

The present invention provides a unique combination of nIR suppression and visible shade characteristics to overcome a long-felt need for a solution to this camouflage shade shifting issue. Specifically, the unique nIR suppressive layer of the present invention provides an average reflectance of 70% or less in the near infrared wavelength range from about 720 nm to about 1,100 nm and an average reflectance greater than 7% and up to 70% in the visible wavelength range from 400 nm to 700 nm. The nIR suppressive layer may have an average reflectance between 9% and 50% in the wavelength range from about 400 nm to 700 nm. Alternatively, the nIR suppressive layer may have an average reflectance between 9% and 30% in the wavelength range from about 400 nm to 700 nm. The inventive material does not appear black when viewed in a daylight environment. One surprising effect of this invention is that high nIR suppression (i.e. reflectance of 70% or less) and an average reflectance from 400 nm to 700 nm of between about 14% and 70% is achieved in a single nIR suppressive layer.

The nIR suppressive layer of the present invention is provided having a first side and a second side, wherein at least one side has a nIR absorption characteristic to provide an average reflectance of 70% or less in the wavelength range of about 720 nm to about 1,100 nm. Said nIR suppressive layer is preferably configured to be used in conjunction with a camouflage textile, wherein the nIR suppressive layer is oriented behind the camouflage textile (e.g. on the side opposite the camouflage pattern) so as provide nIR suppression of incident electromagnetic radiation in the nIR wavelength range. This feature is particularly useful because reduced reflectivity in this wavelength range reduces the visibility of the article when viewed in the dark with a night vision scope. In a further aspect of this invention, the nIR absorption characteristic may be tailored to provide an average reflectance of less than 60% in the wavelength range of about 720 nm to about 1,100 nm. In yet another aspect of this invention the nIR absorption characteristic may be tailored to provide an average reflectance of less than 50% in the wavelength range of about 720 nm to about 1,100 nm. The level of reflectance preferred for any particular environment is dependent on the reflectance of the background that lies behind the article to be hidden by this nIR suppressive layer. For example, a background of trees and leaves is known in the art to have a nIR reflectance of between about 45% and 55%. Because an article of the present can be tailored to have a reflectance that closely matches that of a treed background, the article will appear less visible when viewed in the dark through a night vision instrument.

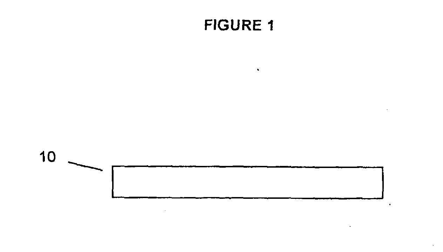

In one embodiment of this invention, shown in Figure 1, the nIR suppressive layer (10) is a monolithic nIR suppressive layer comprised of a polymeric layer in which at least one nIR suppressive material is relatively homogeneous. The nIR suppressive material/additive(s) that provide the nIR suppression can either be soluble in the polymeric matrix or exist as discrete particles. In either case, the nIR suppressive materials should be homogeneously dispersed in the polymeric matrix. Polymers useful for this aspect of the invention include any that exhibit the physical, thermal, and optical performance properties required by the end application. Polymers suitable for this invention can include, but are not limited to, polyurethanes, polyesters, polyolefins, polyamides, polyimides, fluoropolymers, polyvinyls, polyvinyl chlorides, acrylics, silicones, epoxies, synthetic rubbers, other thermoset polymers, and copolymers of these types. One non-limiting example is a breathable polyurethane with good physical and thermal mechanical properties and which allow moisture vapor to pass therethrough.

When used as a component of a textile construction, the monolithic nIR suppressive layer (10) is preferably thin, flexible, and lightweight so to not significantly affect the properties of the textile composite. Polymeric films having thickness in the range from 5,1$\mu$m (0.2mil) up to about 127$\mu$m (5.0ml) are suitable for this purpose. In a preferred embodiment, the polymeric film thickness is less than or equal to 51$\mu$m (2.0mil). In a more preferred embodiment, the polymeric film thickness is less than or equal to 25$\mu$m (1.0mil).

Achieving the unique balance of visible and near infrared electromagnetic characteristics of the present invention requires a near infrared suppressive additive that can decrease the nIR reflectivity of the base polymeric material while maintaining a light shade visible appearance. A range of additives suitable for decreasing the nIR reflectivity are available. Some preferred additives include inorganic materials such as, but not limited to, carbon, metals, metal oxides, metal compounds, such as, but not limited to, aluminum, aluminum oxide, antimony, antimony oxide, titanium, titanium oxide, cadmium selinide, gallium arsenide, and the like, and organic materials such as, but not limited to, conductive polymers and those described in U.K. Patent Application No. GB 2,222,608A.

Additive loadings can be varied depending on the combination of properties desired. For example, carbon levels on the order of less than 1% by weight, and even down to amounts as low as 0.1 % by weight, of a monolithic nIR suppressive layer (in the absence of other reflective materials in the layer) have been surprisingly found to be effective in nIR suppression, while providing excellent shade retention in the articles. In the presence of other reflective materials in a nIR suppressive layer, higher loadings of carbon can be used to achieve the desired balance of absorption and reflectance in the nIR and visible spectra.

Conversely, at carbon levels on the order of 5% by weight and higher, and even at levels down to 1% by weight, in the absence of other reflective materials (e.g., $TiO_2$ and the like) in the layer, it has been observed that the resulting membrane will appear black to the unaided eye and would darken the shade of any light color textiles to which it is attached. Resulting textile composites from these carbon loading levels show significant and unacceptable darkening of the light color visible camouflage to which it is adhered. This light color shade shifting is particularly problematic in daylight situations, which is also when visible camouflage with the correct shades is most essential.

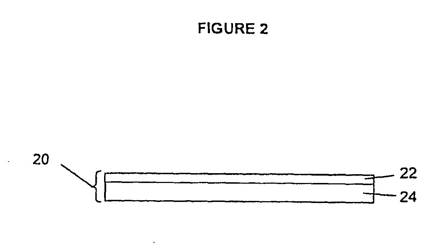

An alternate embodiment of this invention, shown in Figure 2, is a composite nIR suppressive layer (20) comprising a substrate material (24) and a nIR suppressive material (22) wherein the nIR suppressive material provides nIR suppression to the substrate material (24) which alone does not meet the nIR spectral criteria of this invention. Suitable substrate materials (24) include both monolithic and microporous membranes comprising polymers such as but not limited to polyurethanes, polyetheresters, polyolefins, polyesters, and PTFE. Expanded PTFE, such as membranes available from W. L. Gore & Associates, Inc., is a particularly useful substrate material because it can be manufactured to be lightweight, high strength, and highly breathable. In a preferred embodiment, the expanded PTFE microporous membrane has a mass per unit area of less than $30g/m^2$ and more preferably less than about $20g/m^2$. The nIR suppressive material (22), e.g., incorporating additives as described earlier herein, can be coated onto the substrate material (24) by any means capable of providing good adhesion between the coating and the substrate.

Numerous coating methods may be appropriate for use in the present invention depending on the nIR suppressive material to be coated. For instance, vapor deposition can be used to achieve a metalized coating while dip coating or pad coating may be used to apply aqueous or solvent dispersion coatings. Aqueous coating has proven effective to apply a wide range of nIR suppressive coating materials to a variety of substrates. When the substrate material comprises a fluoropolymer, for example, additional additives in the coating material may be used to improve the wetting of the nIR suppressive material (22) coating on the substrate material (24).

It will be appreciated that, in a further embodiment of the current invention, the nIR suppressive film layer can be comprised of more than one level of reflectance. This allows for the incorporation of a nIR disruptive pattern into the film layer. Whereas conventional camouflage materials incorporate such a nIR disruptive layer in the technical face of the textile, incorporating the same into the film would provide an even greater degree of flexibility in shade matching and improved durability of nIR suppression with field use and washing. One method of accomplishing multiple reflectance levels within the nIR would be through the use of a coating or imbibing the nIR suppressive layer into or on the film surface. As described above, this could be achieved through the use of an aqueous process in conjunction with patterned gravures or screens or the like. In such a process, select areas are treated with differing levels of nIR suppressive material to create multiple levels of reflectance (in a manner analogous to camouflage printing of textiles). The nature of the pattern could be altered in a variety of ways to achieve the particular nIR disruptive pattern desired. Consistent with the teachings of the current invention, one could also modify a nIR suppressive layer (which possesses one level of reflectance) by physically altering its reflectance. This could be achieved by physically modifying some areas by, for example, densifying or abrading select areas to create more than one level of reflectance within the backer layer. It will be appreciated that there are numerous ways to achieve multiple levels of reflectance within the nIR suppressive layer, including but not limited to using multiple types of nIR suppressive materials, chemical modification, coating on a filled polymer, or combinations of any of the above.

A multi-layer construction comprising at least one nIR suppressive layer and at least one textile layer is desirable in applications where greater durability is required, such as in garment and shelter applications. In many instances, camouflage in the visible wavelength region is desired in combination with the near infrared camouflage aspects described above. A unique aspect of the present invention is that, unlike conventional materials where such nIR suppressive materials as carbon are included in the camouflage print ink, the nIR suppressive layer is decoupled from the visible camouflage so that the visible camouflage shades can be retained within desired specifications while simultaneously providing the necessary nIR suppressive characteristics.

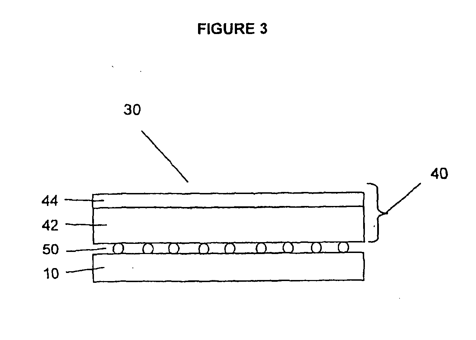

Figure 3 depicts one such near infrared suppressive composite (30) that comprises an outer textile material (40) adhered by an adhesive layer (50) to a monolithic near infrared suppressive layer (10). The outer textile material may comprise, for example, a textile base material (42) and an optional visible camouflage treatment (44). The textile base material (42) can be any suitable textile such as but not limited to woven, nonwoven, and knit forms of polyester, polyimide, nylon, coated glass, cotton fibers, or the like. The optional visible camouflage treatment (44) can be used in applications where both visible and nIR image suppression is desirable. The outer textile material is adhered by adhesive layer (50) to a near infrared suppressive layer (10) which in Figure 3 is shown as a monolithic layer. Adhesive layer (50) may be either discontinuous or continuous. Alternate embodiments include those that incorporate other near infrared suppressive layers such as a composite near infrared suppressive layer. Adhesion between these layers can be achieved by any technique capable of durably attaching the outer textile material (40) to the near infrared suppressive layer (10). Dot lamination is one process known to the skilled artisan that is particularly useful for creating this composite structure.

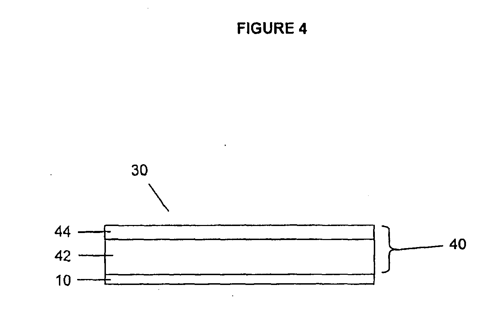

An alternate embodiment of a near infrared suppressive composite can be produced by thermal bonding. Figure 4 shows an outer textile material (40) comprised of a textile base material (42) and an optional visible camouflage treatment (44) bonded directly to a monolithic near infrared suppressive layer (10), such as by thermal bonding. Thermal bonding is most effective in joining, for example, two thermoplastic films or a thermoplastic film and one non-thermoplastic film.

In a further embodiment, the near infrared suppressive layer (10) can be applied directly onto the back surface of the outer textile material, either for near infrared treatment alone or, alternatively, as a part of a coating (40) having additional functional features. The back surface refers to the surface of the textile base material (42) opposite the optional visible camouflage treatment (44). Application methods suitable for this embodiment include but are not limited to transfer coating, screen printing, knife coating and direct extrusion. Alternatively, the nIR suppressive layer may be applied to the back surface of textile base material (42) either as a continuous or discontinuous coating or adhesive layer. In order to preserve the desired visible spectral response, this coating (a) must be sufficiently light in visual appearance (e.g. grey) or (b) must not significantly penetrate the textile or (c) both, so as to minimize the impact on visual shade. The equivalent of a light shade could comprise a combination of light and dark color elements such as but not limited to black adhesive dots adhered to a white film or white adhesive dots adhered to a black film with dot density that results in an acceptable reflectance in both the visible and nIR wavelength regions. Alternatively, the near IR suppressive layer may comprise a white film or black film oriented as a liner, whether attached or unattached, behind the discontinuous coating of black or white dots, respectively, which are adhered on the back surface of the outer textile material.

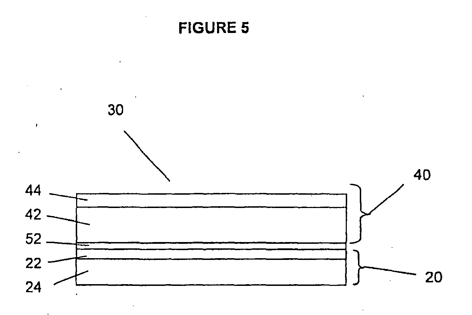

In a further alternate embodiment, the present invention expands the bonding alternatives to the joining of two non-thermally bondable materials through the use of, for example, a thermoplastic joining, or bonding, layer. This embodiment is depicted in Figure 5 wherein a continuous adhesive layer (52) adheres the outer textile material (40) to the composite near infrared suppressive layer (20). Suitable film adhesive layers (52) can comprise any polymeric film that softens at a temperature between about 60°C and about 200°C and has surface characteristics that allow it to adhere to the adjacent surfaces when heated. Thermoplastic polyurethane films, such as those from Deerfield, Inc., are particularly useful for garment applications of this invention because they allow the composite to remain breathable and do not adversely affect the near infrared suppression provided by the near infrared suppressive material (22). This stacked near infrared suppressive composite (30) can then be exposed to heat and pressure sufficient to soften the thermoplastic continuous adhesive layer (52) so that it adheres to the adjacent outer textile material (40) and the composite near infrared suppressive layer (20). In cases where the substrate material (24) has a higher near infrared reflectance relative to the nIR suppressive material (22), the composite near infrared suppressive layer (20) should ideally be oriented such that the near infrared suppressive material (22) is closer to the anticipated source of the incident radiation to take best advantage of the suppressive characteristics. For instance, when a camouflaged garment is desired, the visible camouflage treatment (44) would be oriented to the outside of the garment and then the remaining layers would be in the order depicted in Figure 5.

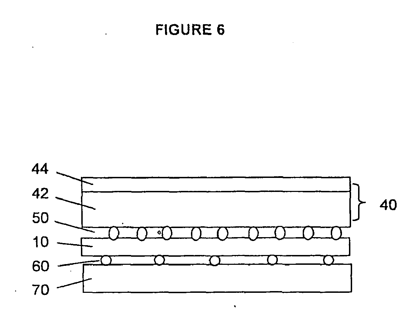

A further embodiment of this invention is a multilayer near infrared construction comprising more than one textile layer and at least one near infrared suppressive layer. One such embodiment is depicted in Figure 6, which shows an outer textile material (40) adhered by adhesive layer (50) to a monolithic near infrared suppressive layer (10), which is further adhered by a second adhesive layer (60) to an inner textile material (70). As discussed above, the outer textile material (40) comprises textile base material (42) having an optional visible camouflage treatment (44) thereon. Both the inner textile material (70) and the outer textile base material (42) may be woven, nonwoven, or knit depending on the requirements of the end application. The near infrared suppressive layer of this embodiment can be a monolithic near infrared suppressive layer (10), as shown in Figure 6, or alternatively, any of the other near infrared suppressive layers described.

In a further embodiment of this invention, a multilayer near infrared suppressive construction comprising more than one textile layer and at least one near infrared suppressive layer can be oriented in an article of apparel, whereby the near infrared suppressive layer is a hung liner (e.g., a lining which is attached at some portion of the periphery of the article but which is not laminated to the inner surface of the outer shell of the article) which lies essentially adjacent to the outer textile layer.

In another embodiment of this invention, articles of the present invention may comprise a laminate of at least one near infrared suppressive layer between two textile layers, wherein the nIR suppressive layer further comprises a breathable, liquidproof component for protection against exposure to the environment. One suitable example of a liquidproof, breathable component is a microporous expanded PTFE, such as membranes available from W. L. Gore and Associates, Inc., because such materials can be manufactured to be lightweight, high strength, and highly breathable. This embodiment is similar to that described above and shown in Figure 6. A further enhancement of this invention entails the use of breathable materials throughout, such that the near infrared suppressive article is breathable. To maximize breathability, both adhesive layer (50) and second adhesive layer (60) are breathable. Hence, the layers of this construction can be either laminated using a discontinuous layer of either a breathable or nonbreathable adhesive or bonded by a continuous film of a breathable material. Breathability of the near infrared construction of this invention is at least 1,000 (grams/($m^2$)(24 hours)) as measured by the Moisture Vapor Transmission Rate Test (MVTR), described later herein. More preferably, the breathability of the near infrared suppressive construction is at least 1,500 (grams/($m^2$)(24 hours)), and even more preferably, the breathability of the near infrared suppressive composite is at least 4,000 (grams/($m^2$)(24 hours)).

## TEST METHODS

### Liquidproof Test

Liquidproof testing was conducted as follows. Material constructions were tested for liquidproofness by using a modified Suter test apparatus with water serving as a representative test liquid. Water is forced against a sample area of about 114mm(4¼-inch ) diameter sealed by two rubber gaskets in a clamped arrangement. For samples incorporating one or more textile layer, a textile layer is oriented opposite the face against which water is forced. When a non-textile nIR suppressive layer sample (i.e., not laminated to a textile layer) is Suter tested, a scrim is placed on the upper face of the sample (i.e., face opposite the face against which water is forced) to prevent abnormal stretching of the sample when subjected to water pressure. The sample is open to atmospheric conditions and is visible to the testing operator. The water pressure on the sample is increased to about 6,9 kPa (1 psi) by a pump connected to a water reservoir, as indicated by an appropriate gauge and regulated by an in-line valve. The test sample is at an angle, and the water is recirculated to assure water contact and not air against the sample's lower surface. The upper face of the sample is visually observed for a period of 3 minutes for the appearance of any water which would be forced through the sample. Liquid water seen on the surface is interpreted as a leak. A passing (liquidproof) grade is given for no liquid water visible on the sample surface within 3 minutes. Passing this test is the definition of "liquidproof" as used herein.

### Moisture Vapor Transmission Rate Test (MVTR)

Samples are die-cut circles of 7.4 cm diameter. The samples are conditioned in a 23°C, 50% $\pm$2% RH test room for 4 hours prior to testing. Test cups are prepared by placing 15 ml of distilled water and 35 g of sodium chloride salt into a 128g (4.5 ounce) polypropylene cup, having an inside diameter of 6.5 cm at the mouth. An expanded PTFE membrane (ePTFE), available from W. L. Gore & Associates, Inc., Elkton, Maryland, is heat sealed to the lip of the cup to create a taut, leakproof microporous barrier holding the salt solution in the cup. A similar ePTFE membrane is mounted taut within a 127mm (5 inch) embroidery hoop and floated upon the surface of a water bath in the test room. Both the water bath and the test room are temperature controlled at 23°C.

The sample is laid upon the floating membrane, a salt cup is weighed, inverted and placed upon the sample. After one hour, the salt cup is removed, weighed, and the moisture vapor transmission rate is calculated from the weight pickup of the cup as follows:

MVTR (grams/($m^2$)(24 hours)) =Weight (g) water pickup in cup/ [Area ($m^2$) of cup mouth multiplied by the Time (days) of test].

### Average Reflectance Test for Visible and Near Infrared Spectra:

Spectral reflectance data is determined on the technical face of the sample (i.e., the camouflage printed side of the textile, laminate, or composite) and is obtained from 400 to 1100 nanometers (nm) at 20 nm intervals on a spectrophotometer (Data Color CS-5) (capable of measuring reflectance at wavelengths of 400-1100nm or greater) relative to a barium sulfate standard. The spectral bandwidth is set at less than 26 nm at 860 nm. Reflectance measurements are made with the monochromatic mode of operation.

The samples were measured as a single layer, backed with six layers of the same fabric and shade. Measurements were taken on a minimum of two different areas and the data averaged. The measured areas were chosen to be at least 152mm (6-inches) away from the selvage (edge). The specimen was viewed at an angle no greater than 10 degrees from the normal, with the specular component included.

Instrument calibration: Photometric accuracy of the spectrophotometer was calibrated to within 1 percent and wavelength accuracy within 2 nm. The standard aperture size used in the color measurement devise was 25 to 32mm (1.0 to 1.25 inches) in diameter for Woodland and Desert camouflage and 9,5mm (0.3725 inches) in diameter for the Universal camouflage, MARPAT Woodland and MARPAT Desert. Any color having spectral reflectance values falling outside the limits at four or more of the wavelengths specified in MIL-DTL-31011A, MIL-DTL-31011B, or MIL-PRF-32142 were considered a test failure.

Results are reported in terms of average reflectance for a particular wavelength range, unless otherwise specifically noted.

EXAMPLES

**Comparative Example A**

A monolithic polymer layer was made as follows. A polyurethane sample was prepared as taught in U.S. Patent No. 4,532,316. The pre-polymer described was heated at 150°C to fluid form, and 10% titanium dioxide powder (DuPont Chemicals, Wilmington, DE) was dispersed in the polymer by hand mixing to form a homogeneous mixture. The cool, $TiO_2$-filled pre-polymer was then heated at 150°C for one hour. A film was formed from this fluid, and the heated polyurethane pre-polymer was cast at 102$\mu$m (4 mil) thickness using a manual drawn down technique and draw down bar. The resulting film was moisture cured for 48 hours at ambient temperature. Average reflectance of this film was measured in the 400-700nm and 720-1100nm wavelength ranges. This film is referred to as "Comparative A" in Table 1.

**Comparative Example B**

A monolithic polymer layer was made as described in Comparative Example A, except that 5% by weight of carbon black (Vulcan XC72, Cabot Corporation, Boston, MA), was added to the pre-polymer and hand mixed until it appeared homogenous prior to the film-forming step. Average reflectance of this film was measured in the 400-700nm and 720-1100nm wavelength ranges. This film is referred to as "Comparative B" and in Table 1.

**Comparative Example C**

Constructions of each of the films of Comparative Examples A and B and a Day Desert Camouflage Nylon textile (Style #131971, Milliken & Company, Spartanburg, SC), were made by stacking the film and textile in an unbound layered construction and clamping in an embroidery hoop. Average reflectance of the light tan portion (light tan 492 as specified in Mil-DTL-31011B) of each layered construction was measured in the 400-700nm and the 720-1100nm wavelength ranges. Results are reported as "Comparative C1 and C2" in Table 2.

**Comparative Example D**

A monolithic polymer layer was made as follows. A polyurethane sample was prepared as taught in U.S. Patent No. 4,532,316. The pre-polymer described was heated at 150°C for one hour. A film was formed from this fluid, and the heated polyurethane pre-polymer was cast at 102$\mu$m (4 mil) thickness using a manual drawn down technique and draw down bar. The resulting film was moisture cured for 48 hours at ambient temperature. Average reflectance of this film was measured in the 400-700nm and 720-1100nm wavelength ranges. This film is referred to as "Comparative D" in Table 1.

**Comparative Example E**

Two monolithic polymer layers were made as described in Comparative Example D, except that 1% and 5% by weight of carbon black (Vulcan XC72, Cabot Corporation, Boston, MA), respectively, was added to the pre-polymer and hand mixed until it appeared homogenous prior to the film-forming step. Average reflectance of these films was measured in the 400-700nm and 720-1100nm wavelength ranges. These films are referred to as "Comparative E1 and E2" in Table 1.

**Example 1**

Monolithic nIR suppressive layer samples were prepared from polyurethane and additives. Specifically, polyurethane samples were prepared as taught in U.S. Patent No. 4,532,316. The pre-polymer described was heated at 150°C to fluid form, and 10% titanium dioxide powder (DuPont Chemicals, Wilmington, DE) was dispersed in the polymer by hand mixing to form a homogeneous mixture. The cool, $TiO_2$-filled pre-polymer was then heated at 150°C for one hour and divided into five portions. Carbon black (Vulcan XC72, Cabot Corporation, Boston, MA), in five different concentrations of 0.01 %, 0.05%, 0.1 %, 0.5% and 1.0% by weight was added to each portion of the pre-polymer and hand mixed until it appeared homogenous. Films were formed from each of these fluids, whereby the heated polyurethane pre-polymer portions were cast at 102μm (4 mil) thickness using a manual drawn down technique and draw down bars. These films were moisture cured for 48 hours at ambient temperature.

Average reflectance of each of the films was measured in the 400-700nm and 720-1100nm wavelength ranges. Results are reported as Examples 1a-1e in Table 1. As shown in Table 1, small amounts of carbon can yield significant improvement (reduction to 70% or less) in average reflectance (720-1100nm wavelength range) while minimizing the impact on shade, as shown by maintaining an average reflectance of about 9% or more in the wavelength range of 400 to 700nm.

Table 1

| Sample | Sample Composition | % carbon | Average Reflectance (400 nm-700nm) | Average Reflectance (720 nm-1100nm) |
|---|---|---|---|---|
| Comparative A | Polyurethane/ $TiO_2$ Film | 0 | 80.7 | 88.1 |
| Comparative D | Polyurethane Film | 0 | 35.4 | 76.9 |
| Ex. 1a | PU/$TiO_2$/C | 0.01 | 57.2 | 570 |
| Ex.1b | PU/$TiO_2$/C | 005 | 52.5 | 51.6 |
| Ex. 1c | PU/$TiO_2$/C | 0.1 | 50.2 | 48.8 |
| Ex. 1d | PU/$TiO_2$/C | 0.5 | 23.3 | 20.4 |
| Ex. 1e | PU/$TiO_2$/C | 1.0 | 16.4 | 13.9 |
| Comparative E1 | PU/C | 1.0 | 7.0 | 12.2 |
| Comparative E2 | PU/C | 5.0 | 4.8 | 5.3 |
| Comparative B | PU/$TiO_2$/C | 5.0 | 6.0 | 5.1 |

Table 1 shows the average reflectance in the wavelength range of 720-1100nm is substantially reduced for the monolithic near infrared suppressive films (Examples 1a-1d) as compared to Comparative Example A, yet the average reflectance in the wavelength range of 400-700nm is maintained at a desirable level. Conversely, Comparative Example B provides an acceptable average reflectance in the 720-1100nm range, but the average reflectance in the 400-700nm visible range is at a level which would appear black when viewed in visible light and would have a negative impact on the visual shade of the outer textile in the final construction.

**Example 2**

A construction of each of the five near infrared suppressive layer samples formed in Example 1 and a Day Desert Camouflage Nylon textile (Style #131971, Milliken & Company, Spartanburg, SC), was made by stacking each film with the textile material in an unbound layered construction and clamping in an embroidery hoop. The light tan portion of the camouflage textile pattern was used for reflectance measurements on all constructions that include a textile, unless otherwise specified. The average reflectance of each of the five constructions of this example was measured in the 400-700nm and the 720-1100nm wavelength ranges. Results are reported in Table 2 as Examples 2a-2e.

**Comparative Example F**

A composite construction of the film of Comparative Example D and a Day Desert Camouflage light tan color Nylon textile (Style #131971, Milliken & Company, Spartanburg, SC), was made by stacking the film and textile in an unbound layered construction and clamping in an embroidery hoop. Average reflectance of the construction was measured in the 720-1100nm wavelength ranges. Results are reported as "Comparative F" in Table 2.

**Comparative Example G**

Composite constructions of the films of Comparative Example E and a Day Desert Camouflage Nylon textile (Style #131971, Milliken & Company, Spartanburg, SC), were made by stacking the film and textile in an unbound layered construction and clamping in an embroidery hoop. Average reflectance of the constructions was measured in the 720-1100nm wavelength ranges. Results are reported as "Comparative G1" in Table 2.

As shown in Table 2, small amounts of carbon can yield significant improvement (reduction) in average reflectance (720-1100nm wavelength range) while minimizing the impact on shade, as shown by a less than 13% change in average reflectance from 400-700nm compared to the shade standard Comparative C1 (i.e., no carbon). The addition of higher levels of carbon (such as above 1 %) offers no significant additional average reflectance reduction in the 720-1100nm wavelength range.

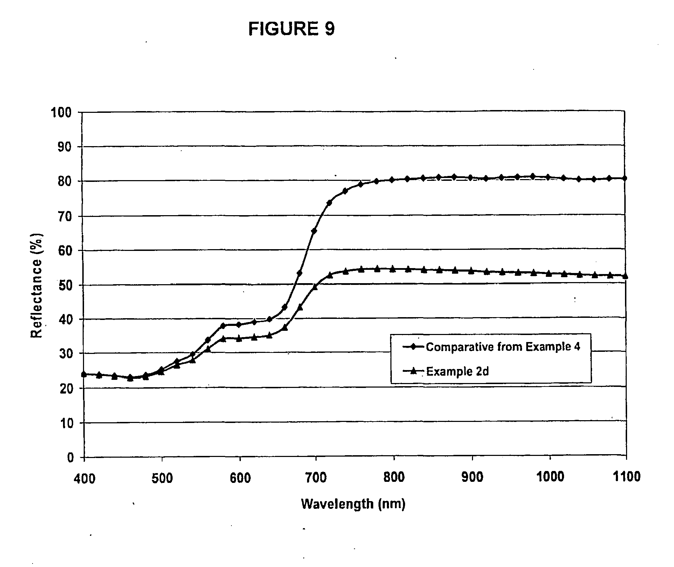

As depicted in Figure 9, Example 2d provides a significant reduction in the reflectance in the nIR wavelength range of between about 720nm to about 1100nm. Yet, in the visible wavelength range of about 400nm to about 700nm, the reflectance is close to the reflectance of the light tan 492 as specified in Mil-DTL-31011B and represented by Comparative C1.

Table 2

| Sample | Sample Composition | % Carbon | Average Reflectance (400-700nm) | Reflectance Change (400-700nm) Relative to C1 (%) | Average reflectance (720nm-1100nm) |
|---|---|---|---|---|---|
| NA | Raw Textile | 0 | 32.4 | | 79.8 |
| Comparative C1 | Textile + PU/TiO$_2$/C | 0 | 34.7 | 0 | 78.0 |
| Comparative F | Textile + PU/C | 0 | 34.2 | 0 | 80.9 |
| Ex. 2a | Textile + PU/TiO$_2$/C | 0.01 | 33.8 | 2.6 | 66.6 |
| Ex. 2b | Textile + PU/TiO$_2$/C | 0.05 | 33.3 | 4.0 | 64.2 |
| Ex. 2c | Textile + PU/TiO$_2$/C | 0.1 | 33.1 | 4.6 | 63.0 |
| Ex.2d | Textile + PU/TiO$_2$/C | 0.5 | 31.0 | 10.6 | 53.3 |
| Ex. 2e | Textile + PU/TiO$_2$/C | 1.0 | 30.5 | 12.1 | 51.6 |
| Comparative C2 | Textile + PU/TiO$_2$/C | 5.0 | 29.8 | 14.1 | 49.0 |
| Comparative G1 | Textile + PU/C | 1.0 | 26.7 | 21.9 | 45.3 |
| Comparative G2 | Textile + PU/C | 5.0 | 27.2 | 20.5 | 49.0 |

**Example 3**

A microporous ePTFE membrane measuring 25 $\mu$m (0.001 inch) thick (0.2 $\mu$m nominal pore size, mass of 20 g/m2, obtained from W. L. Gore & Associates, Inc.) was coated with carbon black (Vulcan XC72, Cabot Corporation, Boston, MA) using a fluorocarbon polymer binder and wetting agents. The binder system was formulated by mixing 2.6g of Witcolate ES2 (30% solution) (obtained from Witco Chemicals/Crompton Corporation, Middlebury, CT), 1.2g of 1-Hexanol (Sigma-Aldrich Chemical Corporation, St. Louis, MO), and 3.0g of fluoropolymer (AG8025, Asahi Glass, Japan) in 13.2g of deionized water. 0.015g of Carbon black was added to the binder system. The mixture was sonicated for 1 minute. The membrane was hand coated with the mixture using a roller to a coating weight of approximately 3 g/m$^2$. The coated membrane was cured at 185°C for 2.5 minutes. The moisture vapor transmission rate of the coated membrane was measured to be 45,942 g/m$^2$ (24 hours).

**Comparative Example H**

Comparative Example H was produced similar to Example 3 with the exception that no carbon was included in the fluorocarbon polymer binder and wetting agents. Average reflectance of the constructions was measured in the 720-1100nm wavelength ranges. Results are reported as "Comparative Example H" in Table 3.

Reflectance results for this nIR suppressive layer are given in Table 3. The average reflectance in the wavelength range of 720nm to 1100nm is substantially reduced for the composite near infrared suppressive layer (Example 3) compared to a comparative fluoropolymer-coated membrane without the carbon in the coating. Consistent with the dual (i.e., lower nIR reflectance and maintain visible reflectance) objective of this invention, the visual shade as represented by the average reflectance in the wavelength range of 400nm to 700nm is maintained above the lower threshold level of about 9% as described in Example 1.

Table 3

| Example No. | Sample | % carbon | average Reflectance (400 nm-700nm) | Average Reflectance (720 nm-1100nm) |
|---|---|---|---|---|
| Compara tive H | Fluorocarbon coated ePTFE | 0 | 72.5 | 83.3 |
| 3 | Fluorocarbon/ Carbon coated ePTFE | 0.075 | 18.9 | 26.8 |

**Example 4**

This example is similar to Example 2 with the exception that the nIR suppressive layer here is a composite of a white ePTFE membrane and the nIR suppressive coating described in Example 3.

The back (i.e., the side opposite the camouflage side of the textile) side of the Nylon Day Desert Camouflage textile (Style #131971, Milliken & Company, Spartanburg, SC) was adhered to the two membranes of Example 3 as follows. Duro All Purpose Spray Adhesive (Henkel Consumer Adhesives, Inc., Avon, Ohio) was sprayed onto the composite membrane until a uniform, light coverage was observed. The back of the camouflage textile was then laid onto the adhesive side of the composite membrane. A 4½ kg (ten pound) hand roller was passed back and forth across the sample to set the bond. The sample was allowed to cure under ambient conditions for 30 minutes. Moisture vapor transmission rate of the nIR suppressive laminate construction was determined to be 9,200 $g/m^2$(24 hours).

**Comparative Example I**

Comparative Example I was produced similar to Example 4 with the exception that Comparative Example H was used in place of the nIR suppressive layer. Average reflectance of the constructions was measured in the 720-1100nm wavelength ranges. Results are reported as "Comparative Example I" in Table 3.

Reflectance results for this construction are given in Table 4. The average reflectance in the wavelength range of 720nm to 1100nm is substantially reduced for the construction of the textile and near infrared suppressive layer (Example 4) compared the equivalent construction without the nIR suppressive additive. The average reflectance in the wavelength range of 400-700nm was maintained close to that of the non-nIR suppressive control sample (i.e, Comparative I).

Table 4

| Example No. | Sample | % Carbon | Average reflectance (400nm-700nm) | Average reflectance (720nm-1100nm) |
|---|---|---|---|---|
| Comparative 1 | Textile + Fluorocarbon coated ePTFE | 0 | 34.4 | 79.9 |
| 4 | Textile + Example 3 | 0.075 | 30.1 | 56.3 |

**Example 5**

This example represents a multilayer near infrared suppressive construction similar to that depicted in Figure 5, where continuous adhesive layer (52) is a translucent monolithic polyurethane film, Duraflex PT1710S (Deerfield Urethanes, Whately, MA), that was put between the composite near infrared suppressive layer (20) and Nylon Day Desert Camouflage textile (Style #131971, Milliken & Company, Spartanburg, SC) (40). Sample 5a was produced stacking the nIR suppressive layers of Example 3 with the textile material in an unbound layered construction and clamping in an embroidery hoop. Sample 5b was produced by stacking the translucent polyurethane film on the back side of the textile and then stacking the nIR suppressive layer of Example 5 on the translucent polyurethane film. This stacked construction was held together using an embroidery hoop. The light tan portion of the camouflage textile pattern was used for the reflectance measurements.

The average reflectance of these samples was measured in the 720-1100nm wavelength range. The results shown in Table 5 show indicate that the presence of the intervening translucent polyurethane layer had essentially no effect on the nIR suppression of this construction.

Table 5: Near infrared Suppressive Layer, Translucent Polyurethane layer and Textile Combination

| Example No. | Sample | % carbon | Average Reflectance (720 nm-1100nm) |
|---|---|---|---|
| Comparative I | Textile + Fluorocarbon coated ePTFE | 0 | 79.9 |
| 5a | Textile + Fluorocarbon/ Carbon coated | 0.08 | 56.6 |
| 5b | Textile + Polyurethane Film + Fluorocarbon/ | 0.08 | 56.2 |

**Example 6**

In this embodiment of the present invention, a composite near infrared suppressive layer (20) was produced similar to that depicted in Figure 2. A microporous ePTFE membrane 25$\mu$m (0.001 inch) thick of nominal 0.2 $\mu$m pore size, and a mass of 20 g/m$^2$ obtained from W. L. Gore & Associates, Inc. was coated with antimony oxide (Celnax® CX-Z210IP obtained from Nissan Chemicals America Corporation, Houston, Texas) using a wetting agent (isopropyl alcohol) as followed by one skilled in such art. Antimony oxide was added at 20% weight of antimony oxide per gram of the wetting agent. The membrane was hand coated with the mixture using a roller to a coating weight of approximately 3 g/m$^2$. The coated membrane was cured at ambient temperature and humidity.

**Comparative Example J**

Comparative Example J is a microporous ePTFE membrane measuring 25$\mu$m (0.001 inch) thick (0.2 $\mu$m nominal pore size, mass of 20 g/m$^2$, obtained from W. L. Gore & Associates, Inc.)

Reflectance results for this nIR suppressive layer are given in Table 6. The average reflectance in the wavelength range of 720nm to 1100nm is dramatically reduced for the composite near infrared suppressive layer (Example 6) compared to a comparative white ePTFE membrane with no coating. The average reflectance in the wavelength range of 400nm to 700nm is maintained above the lower threshold level of about 9% as described in Example 1.

Table 6: Near Infrared Suppressive Layer

| Example No. | Sample | % SbO$_2$ | Average reflectance (400 nm-700nm) | Average reflectance (720 nm-1100nm) |
|---|---|---|---|---|
| Comparative J | ePTFE | 0 | 72.5 | 83.3 |
| 6 | SbO$_2$ coated ePTFE | 20.0 | 14.3 | 4.7 |

**Example 7**

This example is similar to Example 2 with the exception that in this Example the nIR suppressive layer of Example 6 was used.

A construction of the near infrared suppressive layer (Example 6) and a Day Desert Camouflage Nylon textile (Style #131971, Milliken & Company, Spartanburg, SC), was made by stacking each flm with the textile material in an unbound layered construction and clamping in an embroidery hoop. The light tan portion of the camouflage textile pattern was used for reflectance measurements.

**Comparative Example K**

Comparative Example K was produced similar to Example 7 with the exception that Comparative Example J was used in place of the nIR suppressive layer of Example 6.

The average reflectance of this Example 7 was measured in the 720-1100nm wavelength range with the results reported in Table 7 as Example 7. The average reflectance in the wavelength range of 720nm to 1100nm is reduced compared to a similar construction using a comparative white ePTFE membrane with no coating.

Table 7: Near infrared Suppressive Layer and Textile Combination

| Example No. | Sample | % SbO$_2$ | Average reflectance (720-1100nm) |
|---|---|---|---|
| Comparative K | Textile + ePTFE | 0 | 79.9 |
| 7 | Textile + Example 6 | 20.0 | 45.1 |

The above examples show that the nIR suppressive layer can be adhered to the back of the textile (e.g., Examples 2 and 4), or separated from the back of the textile by an inert intervening layer (e.g., Example 5).

While particular embodiments of the present invention have been illustrated and described herein, the present invention should not be limited to such illustrations and descriptions. It should be apparent that changes and modifications may be incorporated and embodied as part of the present invention within the scope of the following claims.

**Example 8**

This example represents a near infrared suppressive composite similar to those depicted in Figure 4 and discussed above wherein the textile base material (42) is adhered to a monolithic near infrared suppressive layer (10). This specific example involves coating the near infrared suppressive material onto the backside of an outer textile material (40).

The back (i.e., the side opposite the camouflage side of the textile) side of the Nylon Day Desert Camouflage textile (Style #131971, Milliken & Company, Spartanburg, SC) was coated with 4 g/m$^2$ of a homogenous polyurethane coating containing carbon black, Vulcan XC72 (Cabot Corporation, Boston, MA). A 45 quad Gravure Roll at 0,04m/s (8 ft/min) speed and 345kPa (50 psi) pressure was used for this coating. The material was cured for about one minute at 160 C temperatures under moisture.

A construction of the above near infrared suppressive layer sample and a microporous ePTFE membrane measuring 25$\mu$m (0.001 inch) thick (0.2 $\mu$m nominal pore size, mass of 20 g/m$^2$, obtained from W. L. Gore & Associates, Inc.), was made by stacking each film with the textile material in an unbound layered construction and clamping in an embroidery hoop. The light tan portion of the camouflage textile pattern was used for reflectance measurements on this construction, unless otherwise specified. The average reflectance of the construction of this example was measured in the 400-700nm and the 720-1100nm wavelength ranges. Results are reported in Table 8 as Example 8.

**Comparative Example L**

Comparative Example L was produced similar to Example 8 with the exception that no near infrared suppressive coating was applied to the back face of the textile. Average reflectance of the constructions was measured in the 720-1100nm wavelength ranges. Results are reported as "Comparative Example L" in Table 8.

Reflectance results for these constructions are given in Table 8. The average reflectance the wavelength range of 720nm to 1100nm is substantially reduced for the construction of the textile and near infrared suppressive layer (Example 8) compared the equivalent construction without the nIR suppressive additive. The average reflectance in the wavelength range of 400-700nm was maintained close to that of the non-nIR suppressive control sample (i.e., Comparative L).

Table 8: Near infrared Suppressive Layer and Textile Combination

| Example No. | Sample | % Carbon | Average reflectance (400nm-700nm) | Average reflectance (720nm-1100nm) |
|---|---|---|---|---|
| Comparative L | Textile + ePTFE | 0 | 34.4 | 79.9 |
| 8 | PU/C coating on Textile back / ePTFE | 0.1 | 32.4 | 65.1 |

### Example 9

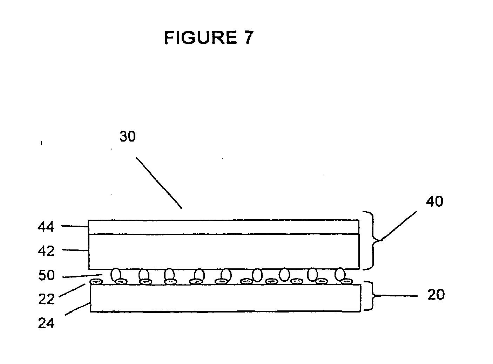

This example represents a near infrared suppressive composite similar to those depicted in Figure 7 and discussed above wherein the textile base material (42) is adhered to a construction of a discontinuous near infrared suppressive material (22) on monolithic polymer substrate material (24). This specific example involves coating the near infrared suppressive material in form of discontinuous dots onto the face of ePTFE.

A microporous ePTFE membrane measuring 25 $\mu$m (0.001 inch ) thick (0.2 $\mu$m nominal pore size, mass of 20 g/m$^2$, obtained from W. L. Gore & Associates, Inc.) was coated with discontinuous dots of a homogeneous polyurethane coating containing carbon black, Vulcan XC72 (Cabot Corporation, Boston, MA). A 35R100 Gravure Roll at 0.04m/s (8 Ft/Min ) speed and 345 kPa (50 psi ) pressure was used for this coating. The material was cured for about one minute at 160° temperatures under moisture.

A construction of the above near infrared suppressive layer sample and a Day Desert Camouflage Nylon textile (Style #131971, Milliken & Company, Spartanburg, SC), was made by stacking the film with the textile material in an unbound layered construction and clamping in an embroidery hoop. The light tan portion of the camouflage textile pattern was used for reflectance measurements on this construction. The average reflectance of the construction of this example was measured in the 400-700nm and the 720-1100nm wavelength ranges. Results are reported in Table 9 as Example 9.

### Comparative Example M

Comparative Example M was produced similar to Example 9 with the exception that no discontinuous near infrared suppressive coating was applied to the membrane. Average reflectance of the constructions was measured in the 720-1100nm wavelength ranges. Results are reported as "Comparative Example M" in Table 9.

Reflectance results for these constructions are given in Table 9. The average reflectance the wavelength range of 720nm to 1100nm is substantially reduced for the construction of the textile and near infrared suppressive layer (Example 9) compared the equivalent construction without the nIR suppressive additive. The average reflectance in the wavelength range of 400-700nm was maintained close to that of the non-nIR suppressive control sample (i.e., Comparative M).

Table 9: Near infrared Suppressive Layer and Textile Combination

| Example No. | Sample | % Carbon | Average reflectance (400nm-700nm) | Average reflectance (720nm-1100nm) |
|---|---|---|---|---|
| Comparative M | Textile + ePTFE | 0 | 34.4 | 79.9 |
| 9 | Textile + PU/C coating on ePTFE | 0.25 | 32.5 | 67.4 |

### Example 10

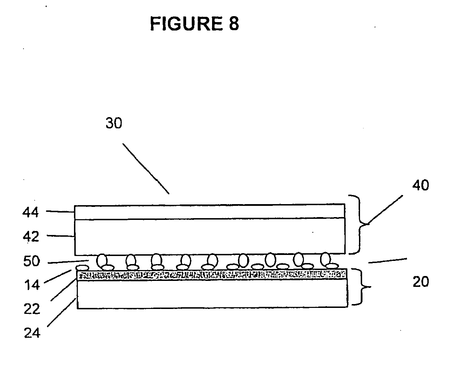

This example depicts a near infrared suppressive composite similar to those depicted in Figure 8 and discussed above wherein the textile base material (42) is adhered to a construction of a discontinuous polyurethane/TiO$_2$ coating on a continuous near infrared suppressive material (22) on monolithic polymer substrate material (24). This specific example involves coating of discontinuous dots of a polyurethane coating containing TiO$_2$ additive on the near infrared suppressive material, which in this case is a continuous coating of a polyurethane coating containing carbon, onto the face of ePTFE.

A microporous ePTFE membrane measuring (25 $\mu$m 0.001 inch ) thick (0.2 $\mu$m nominal pore size, mass of 20 g/m$^2$, obtained from W. L. Gore & Associates, Inc.) was coated with a continuous monolithic coating of a homogenous polyurethane containing 1% by weight carbon black, Vulcan XC72 (Cabot Corporation, Boston, MA). Next this construction was coated with discontinuous dots of a similar homogeneous polyurethane coating containing 1% by weight titanium dioxide powder (DuPont Chemicals, Wilmington, DE). A 35R100 Gravure Roll at 0.04m/s (8 ft/min ) speed and 345 kPa (50 psi ) pressure was used for this coating. The material was cured for about one minute at 160° C temperatures under moisture.

A construction of the above near infrared suppressive layer sample and a Day Desert Camouflage Nylon textile (Style #131971, Milliken & Company, Spartanburg, SC), was made by stacking the film with the textile material in an unbound layered construction and clamping in an embroidery hoop. The light tan portion of the camouflage textile pattern was used for reflectance measurements on this construction. The average reflectance of the construction of this example was measured in the 400-700nm and the 720-1100nm wavelength ranges. Results are reported in Table 10 as Example 10.

**Comparative Example N**

Comparative Example N was produced similar to Example 10 with the exception that neither the continuous near infrared suppressive coating nor the discontinuous polyurethane/TiO$_2$ coating was applied to the membrane. Average reflectance of the constructions was measured in the 720-1100nm wavelength ranges. Results are reported as "Comparative Example N" in Table 10.

Reflectance results for these constructions are given in Table 10. The average reflectance in the wavelength range of 720nm to 1100nm is substantially reduced for the construction of the textile and near infrared suppressive layer (Example 10) compared to the equivalent construction without the nIR suppressive substrate. The average reflectance in the wavelength range of 400-700nm was maintained close to that of the non-nIR suppressive control sample (i.e., Comparative N).

Table 10: Near infrared Suppressive Layer and Textile Combination

| Example No. | Sample | % Carbon | Average reflectance (400nm-700nm) | Average reflectance (720nm-1100nm) |
|---|---|---|---|---|
| Comparative M | Textile + ePTFE | 0 | 34.4 | 79.9 |
| 10 | Textile + PU/TiO$_2$ on PU/C coating on ePTFE | 0.25 | 30.2 | 53.7 |

**Claims**

1. An article comprising:

   a textile having a visual camouflage pattern side and a near-infrared suppressive layer adjacent the textile on a textile side opposite the visible camouflage pattern side, said near-infrared suppressive layer comprising a polymeric film, and a near-infrared suppressive material in the form of particles wherein the article has an average reflectance of between about 9% and about 70% in the wavelength range from about 400 nm to 700 nm, and an average reflectance of less than or equal to 70% in the wavelength range from about 720 nm to 1100 nm.

2. The article of claim 1, wherein the polymeric film comprises polyurethane.

3. The article of claim 1, wherein the polymeric film comprises polyurethane and the near-infrared suppressive particles are disposed in the polyurethane film

4. The article of claim 1, wherein the textile and near infrared suppressive layer is a laminate.

5. The article of claim 1, wherein said article has a change in average reflectance of less than 13% in the wavelength range of 400 nm to 700 nm as measured in the light tan 492 portion of Mil-DTL-31011 B textile, where the change is defined by the formula: (reference-article)/reference where the reference is the construction without the near-infrared suppressive material.

6. The article of claim 1, wherein the article has an average reflectance between 9% and 50% in the wavelength range from about 400 nm to 700 nm.

7. The article of claim 1, wherein the article has an average reflectance between 9% and 30% in the wavelength range from about 400 nm to 700 nm.

8. The article of claim 1, wherein the article has an average reflectance of 60% or less in the wavelength range from about 720 nm - 1100 nm.

9. The article of claim 1, wherein the article has an average reflectance of 50% or less in the wavelength range from about 720 nm - 1100 nm.

10. The article of claim 1, wherein said near infrared suppressive layer has an average reflectance of 40% or less in the wavelength range from about 720 nm - 1100 nm.

11. The article of claim 1, wherein said near infrared suppressive layer has an average reflectance of 30% or less in the wavelength range from about 720 nm - 1100 nm.

12. The article of claim 1, wherein said polymeric film is selected from the group consisting of polyurethane, polyester, polyetherpolyester, polyethylene, polyamide, silicone, polyvinylchloride, acrylic, fluoropolymers, and copolymers thereof.

13. The article of claim 1, wherein said near infrared suppressive layer comprises carbon.

14. The article of claim 1, wherein said near infrared suppressive layer comprises a metal.

15. The article of claim 14, wherein the metal is aluminium.

16. The article of claim 14, wherein said near-infrared suppressive layer comprises antimony oxide.

17. The article of claim 1, wherein said near infrared suppressive layer incorporates organic materials selected from the group consisting of 5-membered ring polymers and 6-membered ring polymers.

18. The article of claim 13, wherein the carbon is present in an amount less than 1.0% by weight based on the total near-infrared suppressive layer weight.

19. The article of claim 13, wherein the carbon is present in an amount less than or equal 0.5% by weight based on the total near-infrared suppressive layer weight.

20. The article of claim 1, wherein the polymeric film is liquidproof.

21. The article of claim 1, wherein the polymeric film is breathable.

22. The article of claim 1, wherein the polymeric film is microporous.

23. The article of claim 1, wherein the polymeric film is oleophobic.

24. The article of claim 1, wherein the polymeric film is microporous polytetrafluoroethylene.

25. The article of claim 1, wherein the near-infrared suppressive layer comprises a coating on the back side of the textile.

26. The article of claim 25, wherein the coating is continuous.

27. The article of claim 25, wherein the coating is discontinuous.

28. The article of claim 1, wherein the near-infrared suppressive layer comprises microporous polytetrafluoroethylene with a coating thereon comprising carbon.

29. The article of claim 28, wherein the coating is continuous.

30. The article of claim 28, wherein the coating is discontinuous.

31. The article of claim 28, wherein said near-infrared suppressive layer has a moisture vapor transmission rate of at least 1000 g/m$^2$ (24 hours) and is liquidproof.

32. The article of claim 1, wherein the at least one textile has a weight of 150 g/m$^2$ or less.

33. The article of claim 1, wherein the textile comprises a material selected from the group consisting of polyester, polyamide, polypropylene, acrylic, polyaramid, nylon/cotton blend, polybenzimidizole.

34. The article of claim 1, wherein the near-infrared suppressive layer is adhered to the textile by at least one intervening polymeric layer located between the textile material and the near-infrared suppressive layer.

35. The article in claim 1, wherein the near-infrared suppressive layer possesses a disruptive pattern in the wavelength range of 720nm - 1200nm.

36. The article in claim 1, wherein the near-infrared suppressive layer contains multiple functional fillers.

37. The article of claim 36, wherein the near-infrared suppressive layer contains at least one nIR suppressive and an additional functional filler that affects the reflectance characteristics in the visible or nIR.

38. The article in claim 1, wherein the near-infrared suppressive layer contains carbon and titanium dioxide.

39. A near-infrared suppressive clothing article based on the article of claim 1.

40. A near-infrared suppressive shelter or protective cover based on the article of claim 1.

41. The article of claim 1, wherein the near-infrared suppressive layer is comprised of microporous PTFE, containing a carbon coating on a side of the microporous ePTFE adjacent to the textile and an additional carbon containing monolithic coating on a side of the microporous ePTFE opposite the textile.

42. The article of claim 4, wherein the near-infrared suppressive layer is present as discrete elements disposed between the textile and a non-near-infrared suppressive layer.

43. The article of claim 4, wherein material that is reflective in the visible wavelength range of 400 nm to 700 nm is present as discrete elements disposed between the textile and the near-infrared suppressive layer.

44. The article of claim 1, wherein the textile comprises a front side and a back side, wherein the front side comprises a visible light tan color portion that corresponds with light tan 492 as determined in Mil-DTL-31011 B.

45. The article of claim 46, wherein the article has a change in average reflectance of less than 13% in the wavelength range of 400 nm to 700 nm as measured in the light tan 492 portion of Mil-DTL-31011 B textile, where the change is defined by the formula:

$$(\text{reference - article}) / \textbf{reference}$$

(reference-article) reference
where the reference is the construction without the near-infrared suppressive material.

46. The article of claim 1, wherein the near-infrared layer has a thickness between 5.1 $\mu$m and 127 $\mu$m.

47. The article of claim 46, wherein the article has an average reflectance of between about 9% and about 70% in the wavelength range from about 400 nm to 700 nm and an average reflectance of less than or equal to 60% in the wavelength range from about 720 nm to 1100 nm.

48. The article of claim 1, wherein the textile front side includes a printed colour portion and the near-infrared suppressive layer comprises a polymeric film and metallised near-infrared suppressive material, wherein the nIR suppressive layer has a thickness between 5.1 $\mu$m and 127 $\mu$m.

49. A method of providing near-infrared suppression to a fabric article having a face textile with a light tan color portion on a face side without substantially altering the visible reflectance of the fabric article: the method comprising the steps of:

(a) providing a textile having a face side with a light tan color portion that corresponds to light tan 492 as determined in MIL-DLT-31011B, and a back side;
(b) providing a near-infrared suppressive layer comprising a polymer layer and nIR suppressive material in the form of particles; and

(c) orienting the near-infrared suppressive layer adjacent the back surface of the textile to form a construction that has an average reflectance of between about 9% and about 70% in the wavelength range from about 400nm to 700nm, and an average reflectance of less than or equal to 70% in the wavelength range from about 720nm to 1100nm as measured on the light tan portion of the textile front side, where the change in the visible reflectance of the article is defined by the formula:

$$\text{(reference - article)} / \text{reference}$$

where the reference is the construction without the near-infrared suppressive material.

**Patentansprüche**

1. Artikel der aufweist:

   ein Gewebe mit einer visuellen Tarnmusterseite und einer an das Gewebe angrenzenden Nahinfrarotunterdrückungsschicht auf einer der im sichtbaren Bereich wirkenden Tarnmusterseite gegenüberliegenden Gewebeseite, mit einem Polymerfilm und einem Nahinfrarotunterdrückungsmaterial in Form von Teilchen, wobei der Artikel ein mittleres Reflexionsvermögen zwischen etwa 9% und etwa 70% im Wellenlängenbereich von etwa 400 nm bis 700 nm und ein mittleres Reflexionsvermögen von höchstens 70% im Wellenlängenbereich von etwa 720 bis 1100 nm aufweist.

2. Artikel nach Anspruch 1, wobei der Polymerfilm Polyurethan aufweist.

3. Artikel nach Anspruch 1, wobei der Polymerfilm Polyurethan aufweist und die Nahinfrarotunterdrückungsteilchen in dem Polyurethanfilm angeordnet sind.

4. Artikel nach Anspruch 1, wobei das Gewebe und die Nahinfrarotunterdrückungsschicht ein Laminat sind.

5. Artikel nach Anspruch 1, wobei der Artikel eine Veränderung des mittleren Reflexionsvermögens von weniger als 13% im Wellenlängenbereich von 400 bis 700 nm aufweist, gemessen in dem Hellbraun 492-Abschnitt von MIL-DTL-31011 B-Gewebe, wobei die Veränderung durch die Formel (Vergleichsprobe - Artikel)/Vergleichsprobe definiert ist, wobei die Vergleichsprobe die Konstruktion ohne das Nahinfrarotunterdrückungsmaterial ist.

6. Artikel nach Anspruch 1, wobei der Artikel ein mittleres Reflexionsvermögen zwischen 9% und 50% im Wellenlängenbereich von etwa 400 nm bis 700 nm aufweist.

7. Artikel nach Anspruch 1, wobei der Artikel ein mittleres Reflexionsvermögen zwischen 9% und 30% im Wellenlängenbereich von etwa 400 nm bis 700 nm aufweist.

8. Artikel nach Anspruch 1, wobei der Artikel ein mittleres Reflexionsvermögen von höchstens 60% im Wellenlängenbereich von etwa 720 nm bis 1100 nm aufweist.

9. Artikel nach Anspruch 1, wobei der Artikel ein mittleres Reflexionsvermögen von höchstens 50% im Wellenlängenbereich von etwa 720 nm bis 1100 nm aufweist.

10. Artikel nach Anspruch 1, wobei die Nahinfrarotunterdrückungsschicht ein mittleres Reflexionsvermögen von höchstens 40% im Wellenlängenbereich von etwa 720 nm bis 1100 nm aufweist.

11. Artikel nach Anspruch 1, wobei die Nahinfrarotunterdrückungsschicht ein mittleres Reflexionsvermögen von höchstens 30% im Wellenlängenbereich von etwa 720 nm bis 1100 nm aufweist.

12. Artikel nach Anspruch 1, wobei der Polymerfilm aus der Gruppe ausgewählt ist, die aus Polyurethan, Polyester, Polyetherpolyester, Polyethylen, Polyamid, Silicon, Polyvinylchlorid, Acryl, Fluorpolymeren und Copolymeren davon besteht.

**13.** Artikel nach Anspruch 1, wobei die Nahinfrarotunterdrückungsschicht Kohlenstoff aufweist.

**14.** Artikel nach Anspruch 1, wobei die Nahinfrarotunterdrückungsschicht ein Metall aufweist.

**15.** Artikel nach Anspruch 14, wobei das Metall Aluminium ist.

**16.** Artikel nach Anspruch 14, wobei die Nahinfrarotunterdrückungsschicht Antimonoxid aufweist.

**17.** Artikel nach Anspruch 1, wobei in die Nahinfrarotunterdrückungsschicht organische Materialien eingelagert sind, die aus der Gruppe ausgewählt sind, die aus 5-gliedrigen Ringpolymeren und 6-gliedrigen Ringpolymeren besteht.

**18.** Artikel nach Anspruch 13, wobei der Kohlenstoff in einem Anteil von höchstens 1,0 Gew.-% anwesend ist, bezogen auf das Gesamtgewicht der Nahinfrarotunterdrückungsschicht.

**19.** Artikel nach Anspruch 13, wobei der Kohlenstoff in einem Anteil von höchstens 0,5 Gew.-% anwesend ist, bezogen auf das Gesamtgewicht der Nahinfrarotunterdrückungsschicht.

**20.** Artikel nach Anspruch 1, wobei der Polymerfilm flüssigkeitsfest ist.

**21.** Artikel nach Anspruch 1, wobei der Polymerfilm atmungsaktiv ist.

**22.** Artikel nach Anspruch 1, wobei der Polymerfilm mikroporös ist.

**23.** Artikel nach Anspruch 1, wobei der Polymerfilm oleophob ist.

**24.** Artikel nach Anspruch 1, wobei der Polymerfilm mikroporöses Polytetrafluorethylen ist.

**25.** Artikel nach Anspruch 1, wobei die Nahinfrarotunterdrückungsschicht eine Beschichtung auf der Rückseite des Gewebes bildet.

**26.** Artikel nach Anspruch 25, wobei die Beschichtung kontinuierlich ist.

**27.** Artikel nach Anspruch 25, wobei die Beschichtung diskontinuierlich ist.

**28.** Artikel nach Anspruch 1, wobei die Nahinfrarotunterdrückungsschicht mikroporöses Polytetrafluorethylen mit einer darauf aufgebrachten kohlenstoffhaltigen Beschichtung aufweist.

**29.** Artikel nach Anspruch 28, wobei die Beschichtung kontinuierlich ist.

**30.** Artikel nach Anspruch 28, wobei die Beschichtung diskontinuierlich ist.

**31.** Artikel nach Anspruch 28, wobei die Nahinfrarotunterdrückungsschicht eine Wasserdampfdurchlässigkeitsrate von mindestens 1000 g/m$^2$ (24 Stunden) aufweist und flüssigkeitsfest ist.

**32.** Artikel nach Anspruch 1, wobei das mindestens eine Gewebe ein Gewicht von höchstens 150 g/m$^2$ aufweist.

**33.** Artikel nach Anspruch 1, wobei das Gewebe ein Material aufweist, das aus der Gruppe ausgewählt ist, die aus Polyester, Polyamid, Polypropylen, Acryl, Polyaramid, Nylon/Baumwolle-Gemisch und Polybenzimidizol besteht.

**34.** Artikel nach Anspruch 1, wobei die Nahinfrarotunterdrückungsschicht durch mindestens eine Polymerzwischenschicht zwischen dem Gewebematerial und der Nahinfrarotunterdrückungsschicht mit dem Gewebe verklebt wird.

**35.** Artikel nach Anspruch 1, wobei die Nahinfrarotunterdrückungsschicht ein Disruptive Pattern (DPM = britisches Tarnmuster) im Wellenlängenbereich von 720 nm bis 1200 nm aufweist.

**36.** Artikel nach Anspruch 1, wobei die Nahinfrarotunterdrückungsschicht mehrere funktionelle Füllstoffe enthält.

**37.** Artikel nach Anspruch 36, wobei die Nahinfrarotunterdrückungsschicht mindestens einen Nahinfrarot-unterdrük-

kenden und einen weiteren funktionellen Füllstoff enthält, der die Reflexionseigenschaften im sichtbaren oder Nahinfrarot-Bereich beeinflusst.

38. Artikel nach Anspruch 1, wobei die Nahinfrarotunterdrückungsschicht Kohlenstoff und Titandioxid enthält.

39. Nahinfrarot-unterdrückende Kleidung, basierend auf dem Artikel nach Anspruch 1.

40. Nahinfrarot-unterdrückendes Schutzdach oder Nahinfrarot-unterdrückende Schutzabdeckung, basierend auf dem Artikel nach Anspruch 1.

41. Artikel nach Anspruch, wobei die Nahinfrarotunterdrückungsschicht aus mikroporösem PTFE besteht, das eine Kohlenstoffbeschichtung auf einer dem Gewebe benachbarten Seite des mikroporösen ePTFE (= expandierten PTFE) sowie eine zusätzliche kohlenstoffhaltige monolithische Beschichtung auf einer dem Gewebe entgegengesetzten Seite des mikroporösen ePTFE enthält.

42. Artikel nach Anspruch 4, wobei die Nahinfrarotunterdrückungsschicht in Form von diskreten Elementen anwesend ist, die zwischen dem Gewebe und einer nicht Nahinfrarot-unterdrückenden Schicht angeordnet sind.

43. Artikel nach Anspruch 4, wobei im sichtbaren Wellenlängenbereich von 400 bis 700 nm reflektierendes Material in Form von diskreten Elementen anwesend ist, die zwischen dem Gewebe und der Nahinfrarotunterdrückungsschicht angeordnet sind.

44. Artikel nach Anspruch 1, wobei das Gewebe eine Vorderseite und eine Rückseite aufweist, wobei die Vorderseite einen sichtbaren Abschnitt von hellbrauner Farbe aufweist, der dem in Mil-DTL-31011B festgelegten Hellbraun 492 entspricht.

45. Artikel nach Anspruch 44, wobei der Artikel eine Veränderung des mittleren Reflexionsvermögens von weniger als 13% im Wellenlängenbereich von 400 nm bis 700 nm aufweist, gemessen im Hellbraun 492-Abschnitt von Mil-DTL-31011B-Gewebe, wobei die Veränderung durch die Formel

$$(\text{Vergleichsprobe} - \text{Artikel})/\text{Vergleichsprobe}$$

definiert ist, wobei die Vergleichsprobe die Konstruktion ohne das Nahinfrarotunterdrückungsmaterial ist.

46. Artikel nach Anspruch 1, wobei die Nahinfrarotunterdrückungsschicht eine Dicke zwischen 5,1 $\mu$m und 127 $\mu$m aufweist.

47. Artikel nach Anspruch 46, wobei der Artikel ein mittleres Reflexionsvermögen zwischen etwa 9% und etwa 70% im Wellenlängenbereich von etwa 400 nm bis 700 nm und ein mittleres Reflexionsvermögen von höchstens 60% im Wellenlängenbereich von etwa 720 nm bis 1100 nm aufweist.

48. Artikel nach Anspruch 1, wobei die Gewebevorderseite einen gedruckten Farbabschnitt enthält und die Nahinfrarotunterdrückungsschicht einen Polymerfilm und metallisiertes Nahinfrarotunterdrückungsmaterial aufweist, wobei die Nahinfrarotunterdrückungsschicht eine Dicke zwischen 5,1 $\mu$m und 127 $\mu$m aufweist.

49. Verfahren zur Bereitstellung von Nahinfrarotunterdrückung für einen Gewebeartikel, der einen Oberstoff mit einem Abschnitt von hellbrauner Farbe auf einer Vorderseite aufweist, ohne das Reflexionsvermögen des Gewebeartikels im sichtbaren Bereich wesentlich zu verändern, wobei das Verfahren die folgenden Schritte aufweist:

(a) Bereitstellen eines Gewebes, das eine Vorderseite mit einem Abschnitt von hellbrauner Farbe, die dem in Mil-DTL-31011B festgelegten Hellbraun 492 entspricht, und eine Rückseite aufweist;
(b) Bereitstellen einer Nahinfrarotunterdrückungsschicht, die eine Polymerschicht und Nahinfrarotunterdrückungsmaterial in Form von Teilchen aufweist; und
(c) Ausrichten der Nahinfrarotunterdrückungsschicht angrenzend an die Rückseite des Gewebes, um eine Konstruktion zu bilden, die ein mittleres Reflexionsvermögen zwischen etwa 9% und etwa 70% im Wellenlängenbereich von etwa 400 nm bis 700 nm und ein mittleres Reflexionsvermögen von höchstens 70% im Wellenlängenbereich von etwa 720 nm bis 1100 mn aufweist, gemessen an dem hellbraunen Abschnitt der Gewebevorderseite, wobei die Veränderung des Reflexionsvermögens des Artikels im sichtbaren Bereich durch die Formel

$$(\text{Vergleichsprobe} - \text{Artikel})/\text{Vergleichsprobe}$$

definiert ist, wobei die Vergleichsprobe die Konstruktion ohne das Nahinfrarotunterdrückungsmaterial ist.

**Revendications**

1. Article comprenant:

   un textile possédant un côté à motif de camouflage visuel et une couche supprimant l'infrarouge proche adjacente au textile sur un côté du textile opposé au côté à motif de camouflage visible, ladite couche supprimant l'infrarouge proche comprenant un film polymère et un matériau supprimant l'infrarouge proche sous la forme de particules, où l'article possède une réflectance moyenne d'entre environ 9% et environ 70% dans le domaine de longueur d'onde d'environ 400 nm à 700 nm et une réflectance moyenne inférieure ou égale à 70% dans le domaine de longueur d'onde d'environ 720 nm à 1100 nm.

2. Article selon la revendication 1, dans lequel le film polymère comprend un polyuréthane.

3. Article selon la revendication 1, dans lequel le film polymère comprend un polyuréthane et les particules supprimant l'infrarouge proche sont placées dans le film de polyuréthane.

4. Article selon la revendication 1, dans lequel le textile et la couche supprimant l'infrarouge proche constituent un laminé.

5. Article selon la revendication 1, où ledit article présente un changement dans la réflectance moyenne de moins de 13% dans le domaine de longueur d'onde de 400 nm à 700 nm comme il est mesuré dans la portion de tan pâle 492 de textile Mil-DTL-31011 B, où le changement est défini par la formule: (référence-article)/référence où la référence est la construction sans le matériau supprimant l'infrarouge proche.

6. Article selon la revendication 1, où l'article possède une réflectance moyenne d'entre 9% et 50% dans le domaine de longueur d'onde d'environ 400 nm à 700 nm.

7. Article selon la revendication 1, où l'article possède une réflectance moyenne d'entre 9% et 30% dans le domaine de longueur d'onde d'environ 400 nm à 700 nm.

8. Article selon la revendication 1, où l'article possède une réflectance moyenne de 60% ou moins dans le domaine de longueur d'onde d'environ 720 nm à 1100 nm.

9. Article selon la revendication 1, où l'article possède une réflectance moyenne de 50% ou moins dans le domaine de longueur d'onde d'environ 720 nm à 1100 nm.

10. Article selon la revendication 1, dans lequel ladite couche supprimant l'infrarouge proche possède une réflectance moyenne de 40% ou moins dans le domaine de longueur d'onde d'environ 720 nm à 1100 nm.

11. Article selon la revendication 1, dans lequel ladite couche supprimant l'infrarouge proche possède une réflectance moyenne de 30% ou moins dans le domaine de longueur d'onde d'environ 720 nm à 1100 nm.

12. Article selon la revendication 1, dans lequel ledit film polymère est choisi dans le groupe constitué de polyuréthane, de polyester, de polyétherpolyester, de polyéthylène, de polyamide, de silicone, de polyvinylchlorure, d'acrylique, de fluoropolymères et de copolymères de ceux-ci.

13. Article selon la revendication 1, dans lequel ladite couche supprimant l'infrarouge proche comprend du carbone.

14. Article selon la revendication 1, dans lequel ladite couche supprimant l'infrarouge proche comprend un métal.

**15.** Article selon la revendication 14, dans lequel le métal est de l'aluminium.

**16.** Article selon la revendication 14, dans lequel ladite couche supprimant l'infrarouge proche comprend de l'oxyde d'antimoine.

**17.** Article selon la revendication 1, dans lequel ladite couche supprimant l'infrarouge proche incorpore des matériaux organiques choisis dans le groupe constitué de polymères de cycles de 5 membres et de polymères de cycles de 6 membres.

**18.** Article selon la revendication 13, dans lequel le carbone est présent dans une quantité inférieure à 1,0% en poids sur la base du poids total de la couche supprimant l'infrarouge proche.

**19.** Article selon la revendication 13, dans lequel le carbone est présent dans une quantité inférieure ou égale à 0,5% en poids sur la base du poids total de la couche supprimant l'infrarouge proche.

**20.** Article selon la revendication 1, dans lequel le film polymère est imperméable aux liquides.

**21.** Article selon la revendication 1, dans lequel le film polymère est respirant.

**22.** Article selon la revendication 1, dans lequel le film polymère est microporeux.

**23.** Article selon la revendication 1, dans lequel le film polymère est oléophobe.

**24.** Article selon la revendication 1, dans lequel le film polymère est un polytétrafluoroéthylène microporeux.

**25.** Article selon la revendication 1, dans lequel la couche supprimant l'infrarouge proche comprend un revêtement sur le côté arrière du textile.

**26.** Article selon la revendication 25, dans lequel le revêtement est continu.

**27.** Article selon la revendication 25, dans lequel le revêtement est discontinu.

**28.** Article selon la revendication 1, dans lequel la couche supprimant l'infrarouge proche comprend un polytétrafluoroéthylène microporeux avec un revêtement sur celui-ci comprenant du carbone.

**29.** Article selon la revendication 28, dans lequel le revêtement est continu.

**30.** Article selon la revendication 28, dans lequel le revêtement est discontinu.

**31.** Article selon la revendication 28, dans lequel ladite couche supprimant l'infrarouge proche possède un taux de transmission de vapeur d'eau d'au moins 1000 g/m$^2$ (24 heures) et elle est imperméable aux liquides.

**32.** Article selon la revendication 1, dans lequel le au moins un textile possède un poids de 150 g/m$^2$ ou moins.

**33.** Article selon la revendication 1, dans lequel le textile comprend un matériau choisi dans le groupe constitué de polyester, de polyamide, de polypropylène, d'acrylique, de polyaramide, d'un mélange de nylon/coton, de polybenzimidizole.

**34.** Article selon la revendication 1, dans lequel la couche supprimant l'infrarouge proche est adhérée au textile par au moins une couche polymère intermédiaire localisée entre le matériau du textile et la couche supprimant l'infrarouge proche.

**35.** Article selon la revendication 1, dans lequel la couche supprimant l'infrarouge proche possède un motif à camouflage (DPM = Disruptive Pattern Material = modèle de camouflage britannique) dans le domaine de longueur d'onde de 720 nm à 1200 nm.

**36.** Article selon la revendication 1, dans lequel la couche supprimant l'infrarouge proche contient de multiples charges fonctionnelles.

**37.** Article selon la revendication 36, dans lequel la couche supprimant l'infrarouge proche contient au moins une charge supprimant le nIR (infrarouge proche) et une charge fonctionnelle supplémentaire qui affecte les caractéristiques de réflectance dans le visible ou le nIR.

**38.** Article selon la revendication 1, dans lequel la couche supprimant l'infrarouge proche contient du carbone et du dioxyde de titane.

**39.** Article de vêtement supprimant l'infrarouge proche à base de l'article selon la revendication 1.

**40.** Abri ou couverture protectrice supprimant l'infrarouge proche à base de l'article selon la revendication 1.

**41.** Article selon la revendication 1, dans lequel la couche supprimant l'infrarouge proche est composée d'un PTFE microporeux, contenant un revêtement de carbone sur un côté du ePTFE microporeux adjacent au textile et un revêtement monolithique contenant du carbone supplémentaire sur un côté du ePTFE microporeux opposé au textile.

**42.** Article selon la revendication 4, dans lequel la couche supprimant l'infrarouge proche est présente sous forme d'éléments discrets placés entre le textile et une couche ne supprimant pas l'infrarouge proche.

**43.** Article selon la revendication 4, dans lequel un matériau qui est réfléchissant dans le domaine de longueur d'onde visible de 400 nm à 700 nm est présent sous forme d'éléments discrets placés entre le textile et la couche supprimant l'infrarouge proche.

**44.** Article selon la revendication 1, dans lequel le textile comprend un côté avant et un côté arrière, où le côté avant comprend une portion de couleur de tan pâle visible qui correspond au tan pâle 492 comme il est déterminé dans Mil-DTL-31011B.

**45.** Article selon la revendication 44, où l'article présente un changement dans la réflectance moyenne de moins de 13% dans le domaine de longueur d'onde de 400 nm à 700 nm comme il est mesuré dans la portion de tan pâle 492 de textile Mil-DTL-31011B, où le changement est défini par la formule:

$$(\text{référence-article})/\text{référence}$$

où la référence est la construction sans le matériau supprimant l'infrarouge proche.

**46.** Article selon la revendication 1, dans lequel la couche supprimant l'infrarouge proche possède une épaisseur d'entre 5,1 $\mu$m et 127 $\mu$m.

**47.** Article selon la revendication 46, où l'article possède une réflectance moyenne d'entre environ 9% et environ 70% dans le domaine de longueur d'onde d'environ 400 nm à 700 nm et une réflectance moyenne inférieure ou égale à 60% dans le domaine de longueur d'onde d'environ 720 nm et 1100 nm.

**48.** Article selon la revendication 1, dans lequel le côté avant du textile inclut une portion de couleur imprimée et la couche supprimant l'infrarouge proche comprend un film polymère et un matériau supprimant l'infrarouge proche métallisé, dans lequel la couche supprimant l'infrarouge proche possède une épaisseur d'entre 5,1 $\mu$m et 127 $\mu$m.

**49.** Procédé pour donner une suppression de l'infrarouge proche à un article de tissu possédant un textile avant avec une portion de couleur tan pâle sur un côté avant sans substantiellement modifier la réflectance visible de l'article de tissu; le procédé comprenant les étapes de:

(a) fourniture d'un textile possédant un côté avant avec une portion de couleur tan pâle qui correspond au tan pâle 492 comme il est déterminé dans MIL-DLT-31011B, et un côté arrière;
(b) fourniture d'une couche supprimant l'infrarouge proche comprenant une couche polymère et un matériau supprimant le nIR sous la forme de particules; et
(c) orientation de la couche supprimant l'infrarouge proche adjacente à la surface arrière du textile pour former une construction qui possède une réflectance moyenne d'entre environ 9% et environ 70% dans le domaine de longueur d'onde d'environ 400 nm à 700 nm et une réflectance moyenne inférieure ou égale à 70% dans le domaine de longueur d'onde d'environ 720 nm à 1100 nm comme il est mesuré sur la portion de tan pâle du côté avant du textile, où le changement dans la réflectance visible de l'article est défini par la formule:

(référence-article)/référence où la référence est la construction sans le matériau supprimant l'infrarouge proche.

FIGURE 1

10

FIGURE 2

20

22

24

FIGURE 3

FIGURE 4

FIGURE 5

FIGURE 6

**FIGURE 7**

# FIGURE 8

FIGURE 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5859083 A, Spijkers
- US 20030096546 A, Smith
- US 4560595 A, Johannsson
- US 5955175 A, Culler
- US 4095940 A, Weingarten
- GB 2222608 A
- US 4532316 A